Europäisches Patentamt

European Patent Office

Office européen des brevets

(19)

(11) Veröffentlichungsnummer: **0 245 298**
**B1**

(12) **EUROPÄISCHE PATENTSCHRIFT**

(45) Veröffentlichungstag der Patentschrift: **05.12.90**

(51) Int. Cl.[5]: **C 03 C 3/247**

(21) Anmeldenummer: **86905747.1**

(22) Anmeldetag: **17.10.86**

(86) Internationale Anmeldenummer:
**PCT/DE86/00417**

(87) Internationale Veröffentlichungsnummer:
**WO 87/02352 23.04.87 Gazette 87/09**

(54) OPTISCHES FLUORPHOSPHATGLAS MIT ANOMALER POSITIVER TEILDISPERSION UND VERFAHREN ZU SEINER HERSTELLUNG.

(30) Priorität: **19.10.85 DE 3537292**
**11.10.86 DE 3634674**

(43) Veröffentlichungstag der Anmeldung:
**19.11.87 Patentblatt 87/47**

(45) Bekanntmachung des Hinweises auf die
Patenterteilung:
**05.12.90 Patentblatt 90/49**

(84) Benannte Vertragsstaaten:
**AT CH DE FR GB LI NL**

(56) Entgegenhaltungen:
**DE-A-3 201 370**
**DE-B-1 088 674**
**FR-A-2 241 505**
**FR-A-2 528 032**

**Die Akte enthält technische Angaben, die nach dem Eingang der Anmeldung eingereicht wurden und die nicht in dieser Patentschrift enthalten sind.**

(73) Patentinhaber: **Wild Leitz GmbH**
**Ernst-Leitz-Strasse 30 Postfach 20 20**
**D-6330 Wetzlar 1 (DE)**

(72) Erfinder: **BRÖMER, Heinz**
**Am Hundsrück 7**
**D-6330 Wetzlar 26 (DE)**
Erfinder: **HUBER, Werner**
**Bahnhofstr. 16**
**D-6336 Solms-Albshausen (DE)**
Erfinder: **MEINERT, Norbert**
**Am Sportfeld 5**
**D-6336 Solms-Albshausen (DE)**

Courier Press, Leamington Spa, England.

## EP 0 245 298 B1

**Beschreibung**

Die Anmeldung betrifft ein optisches Fluorphosphatglas mit anomaler positiver Teildispersion auf der Basis von Bariummetaphosphat, Aluminiumfluorid und Erdalkalioxiden sowie ein Verfahren zu dessen Herstellung.

Die Anforderungen an die Qualität optischer Präzisionsgeräte werden ständig größer. Dabei kommt der Verbesserung der apochromatischen Korrektion optischer Linsensysteme eine immer bedeutendere Rolle zu. Hieraus resultieren die Forderungen der optischen Rechner an die Spezialglas-Hersteller, sog. "Theta"-Gläser mit extremen optischen Daten zu entwickeln.

Die ersten bekannten Gläser dieser Reihe waren die KzF-Gläser ("Kurzflinte"). Sie wiesen $\Delta v$-Werte bis ca. $-3{,}7$ auf. Deshalb konnten mit ihnen noch keine großen Erfolge erzielt werden. Bessere Möglichkeiten bieten die neuen KzFS-Gläser ("Kurzflinte-Sondergläser") mit einem $\Delta v$-Wert bis $-7{,}3$. Trotz großer Anstrengungen ist es bisher der Glasentwicklung nicht gelungen, diese "Minus"-Gläser, die für Zerstreuungslinsen eingesetzt werden, weiter zu verbessern.

Neben den apochromatischen Mikroskopobjektiven—hier handelt es sich meistens um Linsendurchmesser von einigen Millimetern—werden auf dem Gebiet der Fotooptik bei langen Brennweiten Apochromate immer notwendiger. Bei diesen hochgeöffneten Teleobjektiven werden teilweise Linsendurchmesser im Bereich $>20$ cm benötigt. Dies bedeutet, daß der Glas-Chemiker große Glasblöcke herstellen muß, die reproduzierbare optische Parameter—vor allem reproduzierbare Brechzahlen—aufweisen und in denen diese Parameter vor allem im gesamten Glasblock-Volumen konstant sind.

Wie weiter oben bereits erwähnt, ist es bisher noch nicht gelungen, den Bereich der "Minus"-Gläser für Zerstreuungslinsen (KzF- und KzFS-Gläser) zu erweitern.

Im Gegensatz hierzu konnten den optischen Rechnern in den letzten Jahren auf dem Sektor der "Plus"-Gläser für Sammellinsen eine Reihe von Neuentwicklungen zur Verfügung gestellt werden, so daß der klassische Fluorit ($CaF_2$) durch stabile "Theta"-Gläser mit ähnlichen optischen Eigenschaften ersetzt werden konnte.

In der DE—OS 32 01 370 sind Gläser ähnlicher optischer Lage angegeben. Diese enthalten jedoch als Glasbildner neben größeren Mengen von Aluminiummetaphosphat (13—39 Gew.-%) grundsätzlich auch Calciummetaphosphat (1—20 Gew.-%). Der Fluoridanteil beträgt 19—47 Gew.-% und neben Bariumoxid ist auch Yttriumoxid und/oder Ytterbiumoxid in Mengen von 1,5—12 Gew.-% enthalten. Nachschmelzen von in der DE—OS 32 01 370 angeführten Beispielen ergaben, daß selbst bei kleinsten Schmelzansätzen von ca. 50 g beim langsamen Abrühren Trübungen nicht zu vermeiden waren und die Schmelzen von einigen Beispielen sogar auskristallisierten.

Aus der DE—A—2 342 484 sind darüber hinaus optische Gläser bekannt, die vergleichbare optische Lageparameter ($n_e$, $v_e$, $\Delta v_e$) aufweisen, vgl. die Beispiele 9 und 10 aus Tabelle 1 dieser Druckschrift. Diese bekannten Gläser weisen jedoch starke Abweichungen von den erfindungsgemäßen Gläsern hinsichtlich ihrer chemischen Zusammensetzung auf. So liegt der elementare Sr-Anteil zwischen 4,32 und 6,42 Gewichts-Prozent (Gew.-%), während er bei den beanspruchten Gläsern zwischen 8 und 9 Gew.-% beträgt und der Phosphor-Anteil liegt über den beanspruchten Werten. Von besonderer Bedeutung ist die Tatsache, daß der rechnerisch ermittelte, auf das Element Lanthan bezogene Wert von 0,38 Gew.-% eine essentielle Komponente in diesem Stand der Technik darstellt.

Die Unterschiede der erfindungsgemäßen Gläser zu denjenigen in der DE—A—2 342 484 werden bei Betrachtung der tatsächlichen Ausgangszusammensetzungen noch markanter. Es ergeben sich bei dem aus elf Komponenten bestehenden Vielstoffsystem lediglich bei dem $Al(PO_3)_3$ und dem $CaF_2$ Überlappungen, wenn man die beiden einzigen relevanten Einzelbeispiele 9 und 10 in den Vergleich mit einbezieht. Das Beispiel 9 weist zusätzlich noch für $SrF_2$ einen Wert auf, der innerhalb des beanspruchten Bereichs liegt. Alle anderen Komponenten liegen mit ihren offenbarten Intervallbereichen außerhalb der beanspruchten Bereiche.

Schließlich ist aus der DE—B—1 088 674 ein Verfahren zum Herstellen alkali- und berylliumfreier, fluoridhaltiger Phosphatgläser bekannt, gemäß dem optische Gläser erschmolzen werden können, die hinsichtlich der Brechzahl $n_d$ und der Abbe-Zahl $v$ den erfindungsgemäßen Gläsern entsprechen, vgl. die Schmelzbeispiele 3066, 3073, 3020, 3070 und 3071. Über die $\Delta v$-Werte sind in dieser Veröffentlichung keine näheren Angaben enthalten. Vergleicht man jedoch bei den genannten Schmelzbeispielen nach Umrechnung der konkret eingesetzten Gemengebestandteile in deren elementare Anteile (in Gew.-%) die erhaltenen Werte mit den erfindungsgemäßen Werten, so zeigen sich lediglich bei den Element-Anteilen des Kalziums, des Aluminiums und des Phosphors Überlappungen. Bei sechs Elementen liegen die durch die DE—B—1 088 674 offenbarten Werte außerhalb der beanspruchten Intervalle. Besonders bedeutsam ist die Abwesenheit von Lanthan in den erfindungsgemäßen Gläsern sowie die starken Abweichungen des Fluor- und des Sauerstoffanteils.

Es ist daher die Aufgabe der vorliegenden Erfindung, ein optisches Glas extremer optischer Lage bereitzustellen, dessen Brechzahl höher als diejenige des Calciumfluorids ($n_e=1{,}4349$) ist, wobei es gleichzeitig die Dispersion klein zu halten und dennoch ein relativ großes positives $\Delta v_e$ beizubehalten gilt, sowie ein Verfahren zum schlierenfreien Erschmelzen dieses Glases in großen Einheiten anzugeben.

Diese Aufgabe wird erfindungsgemäß dadurch gelöst, daß ein optisches Fluorphosphatglas mit anomaler positiver Teildispersion auf der Basis von $Ba(PO_3)_2$, $AlF_3$ und Erdalkalioxiden mit einer Brechzahl $n_e$ von 1,59 bis 1,60, einer Abbe-Zahl $v_e$ von 66 bis 68 und einem $\Delta v_e$-Wert von +6 bis +8 bereitgestellt wird, welches die folgende elementare Zusammensetzung in Gewichts-Prozent aufweist: Magnesium (Mg): 3 bis 4, Barium (Ba): 37 bis 39, Strontium (Sr): 8 bis 9, Kalzium (Ca): 0 bis 1, Aluminium (Al): 3 bis 4, Phosphor (P): 13 bis 14, Fluor (F): 7 bis 8, Sauerstoff (O): 25 bis 26, wobei das F/P-Verhältnis zwischen 0,4 und 0,7 liegt und die Summe der Erdalkalien zwischen 48 und 52 beträgt. Die Aufgabe wird alternativ durch ein Verfahren zur Herstellung eines derartigen Fluorphosphatglases gelöst, und zwar durch Erschmelzen eines Gemenges, das folgende Ausgangszusammensetzung in Gew.-% aufweist: Magnesiummetaphosphat $(Mg(PO_3)_2)$: 21,0 bis 21,3; Bariummetaphosphat $(Ba(PO_3)_2)$: 12,6 bis 13,3; Aluminiummetaphosphat $(Al(PO_3)_3)$: 9,2 bis 9,7; Magnesiumfluorid $(MgF_2)$: 1,2 bis 1,4; Kalziumfluorid $(CaF_2)$: 0 bis 1,0; Strontiumfluorid $(SrF_2)$: 8,5 bis 9,3; Bariumfluorid $(BaF_2)$: 1,9 bis 2,1; Aluminiumfluorid $(AlF_3)$: 5,1 bis 5,6; Strontiumoxid (SrO): 2,7 bis 3,1; Bariumoxid (BaO): 33,2 bis 34,2; Aluminiumoxid $(Al_2O_3)$: 1,9 bis 2,3; wobei die Gesamtmenge der Metaphosphate $Mg(PO_3)_2$, $Ba(PO_3)_2$ und $Al(PO_3)_3$ zwischen 43,2 und 43,9, die Gesamtmenge der Fluoride $MgF_2$, $SrF_2$, $BaF_2$ und $AlF_3$ zwischen 17,1 und 18,5 sowie die Gesamtmenge der Oxide SrO, BaO und $Al_2O_3$ zwischen 38,3 und 39,1 beträgt.

Weitere Ausgestaltungen der vorliegenden Erfindung ergeben sich aus den Unteransprüchen 2 und 3 sowie—alternativ—aus den Verfahrensansprüchen 5 bis 9.

Das Gemenge wird zweckmäßig in einem Platintiegel erschmolzen. Nachfolgend ist die Durchführung einer Schmelze von 10 kg Einwaage beschrieben.

Das extrem gut gemischte Gemenge, wie es im Patentanspruch 5 angegeben ist, wird portionsweise in einen Platintiegel eingelegt, dessen Temperatur ca. 1100°C bis 1150°C beträgt. Das Einlegen des gesamten Gemenges dauert ca. 90 Minuten. Ist die Gesamteinwaage eingeschmolzen, wird die Temperatur kontinuierlich auf ca. 1250°C erhöht und mit einem speziell geformten Platinrührer bei dieser Temperatur etwa 20 Minuten lang permanent gerührt. Die Rührgeschwindigkeit beträgt beispielsweise 120 Umdrehungen pro Minute. Anschließend wird auf eine Temperatur von ca. 1150°C zurückgefahren und unter Intervall-Rühren geläutert. Sobald die Schmelze blasenfrei ist, wird die Rührgeschwindigkeit auf ca. 80 Umdrehungen pro Minute reduziert und bis zur Abußtemperatur von ca. 900°C heruntergefahren. Der Abguß erfolgt sodann in auf ca. 550°C vorgewärmte Formen aus zunderfreiem Stahl. Die Abkühlung wird in einem programmgesteuerten Temperofen durchgeführt.

Der so hergestellte, farblose und schlierenfreie Glasblock wird anschließend einer Feinkühlung unterworfen. Das erhaltene Glas weist die in den Ansprüchen 1 bis 3 angegebene elementare Zusammensetzung in Gewichts-Prozenten (Gew.-%) auf. Nach der durchgeführten Feinkühlung hat das Glas folgende otpische Daten:

$n_e = 1,5984$

$v_e = 67,04$

$u_g' = 0,4822$

$\Delta v_e = +7,36.$

Hierbei bedeuten:

$n_e$ = Brechzahlen

$v_e$ = Abbe-Zahl (Reziprok-Wert der Dispersion)

$u_g'$ = (eigentliche) anomale Teildispersion, wobei gilt:

$$u_g' = \frac{n_g - n_F'}{n_F' - n_C'}$$

dabei bedeuten die tiefgestellten Indizes:

g = die blaue Quecksilberlinie (435,84 nm);

F' = die blaue Cadmiumlinie (479,99 nm);

C' = die rote Cadmiumlinie (643,85 nm);

$+\Delta v_e$ = die Positive-Abweichung von der sogenannten "Normalgeraden", wie sie beispielsweise in der Zeichnung der DE—PS 14 96 563 bzw. der korrespondierenden US—PS 34 51 829 graphisch dargestellt und näher erläutert wurde. Dieser Differenzbetrag wird als "positiver anomaler Teildispersionswert" bezeichnet.

Das erhaltene Glas weist die folgende Transmissionscharakteristik auf:

| $\lambda$ [nm] | $\tau_i$ (5 mm) | $\tau_i$ (25 mm) |
|---|---|---|
| 1014,0 | 0,999 | 0,998 |
| 700,0 | 0,997 | 0,995 |
| 660,0 | 0,997 | 0,983 |
| 620,0 | 0,996 | 0,978 |
| 580,0 | 0,996 | 0,980 |
| 546,1 | 0,996 | 0,980 |
| 500,0 | 0,994 | 0,970 |
| 460,0 | 0,990 | 0,951 |
| 435,8 | 0,986 | 0,932 |
| 420,0 | 0,986 | 0,934 |
| 404,7 | 0,982 | 0,915 |
| 400,0 | 0,979 | 0,901 |
| 390,0 | 0,964 | 0,835 |
| 380,0 | 0,937 | 0,721 |
| 370,0 | 0,881 | 0,531 |
| 365,0 | 0,839 | 0,417 |
| 350,0 | 0,630 | 0,100 |
| 334,1 | 0,306 | 0,003 |
| 320,0 | 0,096 | — |
| 310,0 | 0,045 | — |

Dabei bedeuten:

$\lambda$: die verwendete Meßwellenlänge [nm];

$\tau_i$ (5 mm): den Reintransmissionsgrad eines 5 mm starken Glasplättchens;

$\tau_i$ (25 mm): den Reintransmissionsgrad eines 25 mm starken Glasplättchens.

Weitere physiko-chemische Eigenschaften des erhaltenen Glases sind nachfolgend angegeben:

linearer thermischer Ausdehnungskoeffizient
$\alpha 20/300°C = 13,0$ [$10^{-6} \cdot 1/°C$]
Transformationstemperatur $T_g = 580°C$
Dichte $\delta = 3,98$ g/cm$^3$
Knoop-Härte HK $= 423$.

Das Glas ist fluoreszenzarm und zu Preßlingen mit großem Durchmesser verarbeitbar. Geringfügige Variationen der quantitativen Anteile der Elemente, der Komponenten bzw. der Komponenten-Gruppen—wie z.B. der Erdalkalien bzw. der Fluoride bzw. der Oxide—liegen im Rahmen des Gegenstandes der vorliegenden Erfindung.

**Patentansprüche**

1. Optisches Fluorphosphatglas mit anomaler positiver Teildispersion auf der Basis von Ba(PO$_3$)$_2$, AlF$_3$ und Erdalkalioxiden mit einer Brechzahl $n_e$ von 1.59 bis 1.60, einer Abbe-Zahl $v_e$ von 66 bis 68 und einem $\Delta v_e$-Wert von +6 bis +8, dadurch gekennzeichnet, daß es die folgende elementare Zusammensetzung aufweist (in Gew.-%):

| | |
|---|---|
| Mg | 3—4 |
| Ba | 37—39 |
| Sr | 8—9 |
| Ca | 0—1 |
| Al | 3—4 |
| P | 13—14 |
| F | 7—8 |
| O | 25—26, |

wobei das F/P-Verhältnis zwischen 0,4 und 0,7 liegt und die Summe der Erdalkalien zwischen 48 und 52 beträgt.

2. Glas nach Anspruch 1, dadurch gekennzeichnet, daß es die folgende elementare Zusammensetzung aufweist (in Gew.-%):

| | |
|---|---|
| Mg | 3,1—3,4 |
| Ba | 37,3—38,5 |
| Sr | 8,2—9,0 |
| Ca | 0—0,3 |
| Al | 3,7—3,9 |
| P | 13,0—13,3 |
| F | 7,3—8,0 |
| O | 25,2—25,7, |

wobei das F/P-Verhältnis zwischen 0,5 und 0,6 liegt und die Summe der Erdalkalien zwischen 49,8 und 50,3 beträgt.

3. Glas nach einem der Ansprüche 1 und 2, dadurch gekennzeichnet, daß es eine Brechzahl $n_e=1,598$, eine Abbe-Zahl $v_e=67$, einen $\Delta v_e$-Wert$=+7,4$ und folgende elementare Zusammensetzung aufweist (in Gew.-%):

| | |
|---|---|
| Mg | 3,3 |
| Ba | 38,3 |
| Sr | 8,4 |
| Al | 3,8 |
| P | 13,3 |
| F | 7,3 |
| O | 25,6. |

4. Verfahren zur Herstellung eines optischen Fluorphosphatglases nach einem der vorhergehenden Ansprüche, dadurch gekennzeichnet, daß es aus einem Gemenge erschmolzen wird, welches folgende Ausgangszusammensetzung aufweist (in Gew.-%):

| | |
|---|---|
| $Mg(PO_3)_2$ | 21,0—21,3 |
| $Ba(PO_3)_2$ | 12,6—13,3 |
| $Al(PO_3)_3$ | 9,2—9,7 |
| $MgF_2$ | 1,2—1,4 |
| $CaF_2$ | 0 —1,0 |
| $SrF_2$ | 8,5—9,3 |
| $BaF_2$ | 1,9—2,1 |
| $AlF_3$ | 5,1—5,6 |
| SrO | 2,7—3,1 |
| BaO | 33,2—34,2 |
| $Al_2O_3$ | 1,9—2,3, |

wobei die Gesamtmenge der Metaphosphate $Mg(PO_3)_2$, $Ba(PO_3)_2$ und $Al(PO_3)_3$ zwischen 43,2 und 43,9, die Gesamtmenge der Fluoride $MgF_2$, $SrF_2$, $BaF_2$ und $AlF_3$ zwischen 17,1 und 18,5 sowie die Gesamtmenge der Oxide SrO, BaO und $Al_2O_3$ zwischen 38,3 und 39,1 beträgt.

5. Verfahren nach Anspruch 4, dadurch gekennzeichnet, daß das Gemenge (in Gew.-%) aus

| | |
|---|---|
| $Mg(PO_3)_2$ | 21,0 |
| $Ba(PO_3)_2$ | 13,2 |
| $Al(PO_3)_3$ | 9,6 |
| $MgF_2$ | 1,3 |
| $SrF_2$ | 8,6 |
| $BaF_2$ | 2,0 |
| $AlF_3$ | 5,2 |
| SrO | 2,8 |
| BaO | 34,1 |
| $Al_2O_3$ | 2,2 |

besteht.

6. Verfahren nach Anspruch 4, dadurch gekennzeichnet, daß das Gemenge (in Gew.-%) aus

| | |
|---|---|
| $Mg(PO_3)_2$ | 21,3 |
| $Ba(PO_3)_2$ | 12,7 |
| $Al(PO_3)_3$ | 9,3 |
| $MgF_2$ | 1,2 |
| $CaF_2$ | 0,5 |
| $SrF_2$ | 9,2 |
| $BaF_2$ | 2,0 |
| $AlF_3$ | 5,5 |
| $SrO$ | 3,0 |
| $BaO$ | 33,3 |
| $Al_2O_3$ | 2,0 |

besteht.

7. Verfahren nach Anspruch 4, dadurch gekennzeichnet, daß das Gemenge (in Gew.-%) aus

| | |
|---|---|
| $Ba(PO_3)_2$ | 62,3 |
| $CaF_2$ | 0,5 |
| $SrF_2$ | 0,1 |
| $AlF_3$ | 10,8 |
| $MgO$ | 5,3 |
| $SrO$ | 9,7 |
| $BaO$ | 10,7 |
| $Al_2O_3$ | 0,6 |

besteht.

8. Verfahren nach einem der Ansprüche 4 bis 7, dadurch gekennzeichnet, daß

a) nach Eingeben der Gemengekomponenten in einen Schmelztiegel das Ausgangsgemenge auf 1100—1150°C erhitzt,

b) die Schmelztemperatur auf 1230—1270°C angehoben und über einen Zeitraum zwischen 15 und 30 Minuten unter gleichzeitigem Rühren der Schmelze bei dieser Temperatur belassen,

c) die Schmelze sodann bei einer Temperatur zwischen 1130—1170°C bis zur Blasenfreiheit geläutert,

d) die Schmelztemperatur danach auf 880—920°C reduziert,

e) die Schmelze sodann in auf 530—570°C vorgewärmte Formen abgegossen und

f) schließlich in einem Ofen abgekühlt wird.

9. Verfahren nach Anspruch 8, dadurch gekennzeichnet, daß

a) das Erhitzen des Gemenges bei einer Temperatur von 1120°C,

b) das Anheben der Schmelztemperatur auf 1250°C unter gleichzeitigem Rühren der Schmelze während einer Zeit von 20 Minuten,

c) die Läuterung sodann bei 1150°C,

d) nachfolgend die Reduzierung der Schmelztemperatur auf 900°C,

e) sodann das Abgießen bei 900°C auf in 550°C vorgewärmte Formen und

f) schließlich das Abkühlen im Temperofen erfolgt.

**Revendications**

1. Verre optique au phosphate fluoré avec dispersion particulaire positive anomale à base de $Ba(PO_3)_2$, $AlF_3$ et oxydes de métaux alcalino-terreux ayant un indice de réfraction $n_e$ de 1,59 à 1,60, un nombre de Abbe $v_e$ de 66 à 68 et une valeur $\Delta v_e$ de +6 à +8, caractérisé en ce qu'il présente la composition élémentaire qui suit (en % de poids):

| | |
|---|---|
| Mg | 3—4 |
| Ba | 37—39 |
| Sr | 8—9 |
| Ca | 0—1 |
| Al | 3—4 |
| P | 13—14 |
| F | 7—8 |
| O | 25—26, |

où le rapport F/P est compris entre 0,4 et 0,7 et la somme des alcalino-terreux est comprise entre 48 et 52.

2. Verre selon la revendication 1, caractérisé en ce qu'il présente la composition élémentaire qui suit (en % de poids):

| | |
|---|---|
| Mg | 3,1—3,4 |
| Ba | 37,3—38,5 |
| Sr | 8,2—9,0 |
| Ca | 0 —0,3 |
| Al | 3,7—3,9 |
| P | 13,0—13,3 |
| F | 7,3—8,0 |
| O | 25,2—25,7, |

où le rapport F/P est compris entre 0,5 et 0,6 et la somme des alcalino-terreux est comprise entre 49,8 et 50,3.

3. Verre selon l'une quelconque des revendications 1 et 2, caractérisé en ce qu'il présente un indice de réfraction $n_e = 1,598$, un nombre de Abbe $v_e = 67$, une valeur $\Delta v_e = +7,4$ et la composition élémentaire qui suit (en % en poids):

| | |
|---|---|
| Mg | 3,3 |
| Ba | 38,3 |
| Sr | 8,4 |
| Al | 3,8 |
| P | 13,3 |
| F | 7,3 |
| O | 25,6. |

4. Procédé de fabrication d'un verre optique au phosphate fluoré selon l'une quelconque des revendications précédentes, caractérisé en ce qu'il est élaboré à partir d'un mélange qui présente la composition de départ qui suit (en % en poids):

| | |
|---|---|
| $Mg(PO_3)_2$ | 21,0—21,3 |
| $Ba(PO_3)_2$ | 12,6—13,3 |
| $Al(PO_3)_3$ | 9,2—9,7 |
| $MgF_2$ | 1,2—1,4 |
| $CaF_2$ | 0 —1,0 |
| $SrF_2$ | 8,5—9,3 |
| $BaF_2$ | 1,9—2,1 |
| $AlF_3$ | 5,1—5,6 |
| SrO | 2,7—3,1 |
| BaO | 33,2—34,2 |
| $Al_2O_3$ | 1,9—2,3. |

où la quantité totale des métaphosphates $Mg(PO_3)_2$, $Ba(PO_3)_2$ et $Al(PO_3)_3$ est comprise entre 43,2 et 43,9, la quantité totale des fluorures $MgF_2$, $SrF_2$, $BaF_2$ et $AlF_3$ est comprise entre 17,1 et 18,5 et la quantité totale des oxydes SrO, BaO et $Al_2O_3$ est comprise entre 38,3 et 39,1.

5. Procédé selon la revendication 4, caractérisé en ce que le mélange se compose de (en % en poids):

| | |
|---|---|
| $Mg(PO_3)_2$ | 21,0 |
| $Ba(PO_3)_2$ | 13,2 |
| $Al(PO_3)_3$ | 9,6 |
| $MgF_2$ | 1,3 |
| $SrF_2$ | 8,6 |
| $BaF_2$ | 2,0 |
| $AlF_3$ | 5,2 |
| SrO | 2,8 |
| BaO | 34,1 |
| $Al_2O_3$ | 2,2 |

6. Procédé selon la revendication 4, caractérisé en ce que le mélange se compose de (en % en poids):

| | |
|---|---|
| $Mg(PO_3)_2$ | 21,3 |
| $Ba(PO_3)_2$ | 12,7 |
| $Al(PO_3)_3$ | 9,3 |
| $MgF_2$ | 1,2 |
| $CaF_2$ | 0,5 |
| $SrF_2$ | 9,2 |
| $BaF_2$ | 2,0 |
| $AlF_3$ | 5,5 |
| $SrO$ | 3,0 |
| $BaO$ | 33,3 |
| $Al_2O_3$ | 2,0. |

7. Procédé selon la revendication 4, caractérisé en ce que le mélange se compose de (en % en poids):

| | |
|---|---|
| $Ba(PO_3)_2$ | 62,3 |
| $CaF_2$ | 0,5 |
| $SrF_2$ | 0,1 |
| $AlF_3$ | 10,8 |
| $MgO$ | 5,3 |
| $SrO$ | 9,7 |
| $BaO$ | 10,7 |
| $Al_2O_3$ | 0,6. |

8. Procédé selon l'une quelconque des revendications 4 à 7, caractérisé en ce que

a) après introduction des composants du mélange dans un creuset de fusion, on chauffe le mélange de départ à 1100—1150°C,

b) la température du bain est élevée à 1230—1270°C et est laissée pendant un intervalle de temps de 15 à 30 minutes avec agitation simultanée du bain à cette température,

c) le bain est ensuite affiné à une température comprise entre 1130 et 1170°C jusqu'à ce qu'il n'y ait plus de bulles,

d) la température du bain est ensuite réduite à 880—920°C,

e) les bains sont ensuite coulés dans des moules préchauffés à 530—570°C,

f) enfin on refroidit dans un four.

9. Procédé selon la revendication 8, caractérisé en ce que

a) le chauffage du mélange se produit à une température de 1120°C,

b) l'augmentation de la température du bain à 1250°C se produit avec agitation simultanée du bain pendant un temps de 20 minutes,

c) l'affinage à 1150°C,

d) avec ensuite la réduction de la température du bain à 900°C,

e) puis le moulage à 900°C dans des moules préchauffés à 550°C et

f) enfin le refroidissement dans un four à recuire.

**Claims**

1. Optical fluorophosphate glass with anomalous positive partial dispersion on the base of $Ba(PO_3)_2$, $AlF_3$ and alkaline-earth oxides with a refractive index $n_e$ of 1.59 to 1.60, an Abbe number $v_e$ of 66 to 68 and a $\Delta v_e$ value of +6 to +8, characterised thereby, that it displays the following elementary composition (in % by weight):

| | |
|---|---|
| Mg | 3—4 |
| Ba | 37—39 |
| Sr | 8—9 |
| Ca | 0—1 |
| Al | 3—4 |
| P | 13—14 |
| F | 7—8 |
| O | 25—26, |

wherein the F/P ratio lies between 0.4 and 0.7 and the sum of the alkaline earth amounts to between 48 and 52.

2. Glass according to Claim 1, characterised thereby, that it displays the following elementary composition (in % by weight):

| | |
|---|---|
| Mg | 3.1—3.4 |
| Ba | 37.3—38.5 |
| Sr | 8.2—9.0 |
| Ca | 0 —0.3 |
| Al | 3.7—3.9 |
| P | 13.0—13.3 |
| F | 7.3—8.0 |
| O | 25.2—25.7, |

wherein the F/P ratio lies between 0.5 and 0.6 and the sum of the alkaline earths amounts to between 49.8 and 50.3.

3. Glass according to one of the claims 1 and 2, characterised thereby, that it displays a refractive index $n_e=1.598$, an Abbe number $v_e=67$, a $\Delta v_e$ value $=+7$ and the following elementary composition (in % by weight):

| | |
|---|---|
| Mg | 3.3 |
| Ba | 38.3 |
| Sr | 8.4 |
| Al | 3.8 |
| P | 13.3 |
| F | 7.3 |
| O | 25.6. |

4. Method for the production of an optical fluorophosphate glass according to one of the preceding claims, characterised thereby, that it is molten from a batch which displays the following initial composition (in % by weight):

| | |
|---|---|
| $Mg(PO_3)_2$ | 21.0—21.3 |
| $Ba(PO_3)_2$ | 12.6—13.3 |
| $Al(PO_3)_3$ | 9.2—9.7 |
| $MgF_2$ | 1.2—1.4 |
| $CaF_2$ | 0 —1.0 |
| $SrF_2$ | 8.5—9.3 |
| $BaF_2$ | 1.9—2.1 |
| $AlF_3$ | 5.1—5.6 |
| SrO | 2.7—3.1 |
| BaO | 33.2—34.2 |
| $Al_2O_3$ | 1.9—2.3, |

wherein the total quantity of the metaphosphates $Mg(PO_3)_2$, $Ba(PO_3)_2$ and $Al(PO_3)_3$ amounts to between 43.2 and 43.9, the total quantity of the fluorides $MgF_2$, $SrF_2$, $BaF_2$ and $AlF_3$ amounts to between 17.1 and 18.5 as well as the total quantity of the oxides SrO, BaO and $Al_2O_3$ amounts to between 38.3 and 39.1.

5. Method according to Claim 4, characterised thereby, that the batch consists (in % by weight) of:

| | |
|---|---|
| $Mg(PO_3)_2$ | 21.0 |
| $Ba(PO_3)_2$ | 13.2 |
| $Al(PO_3)_3$ | 9.6 |
| $MgF_2$ | 1.3 |
| $SrF_2$ | 8.6 |
| $BaF_2$ | 2.0 |
| $AlF_3$ | 5.2 |
| SrO | 2.8 |
| BaO | 34.1 |
| $Al_2O_3$ | 2.2. |

6. Method according to Claim 4, characterised thereby, that the batch consists (in % by weight) of:

| | |
|---|---|
| Mg(PO$_3$)$_2$ | 21.3 |
| Ba(PO$_3$)$_2$ | 12.7 |
| Al(PO$_3$)$_3$ | 9.3 |
| MgF$_2$ | 1.2 |
| CaF$_2$ | 0.5 |
| SrF$_2$ | 9.2 |
| BaF$_2$ | 2.0 |
| AlF$_3$ | 5.5 |
| SrO | 3.0 |
| BaO | 33.3 |
| Al$_2$O$_3$ | 2.0. |

7. Method according to Claim 4, characterised thereby, that the batch consists (in % by weight) of:

| | |
|---|---|
| Ba(PO$_3$)$_2$ | 62.3 |
| CaF$_2$ | 0.5 |
| SrF$_2$ | 0.1 |
| AlF$_3$ | 10.8 |
| MgO | 5.3 |
| SrO | 9.7 |
| BaO | 10.7 |
| Al$_2$O$_3$ | 0.6. |

8. Method according to one of the claims 4 to 7, characterised thereby, that
a) after input of the batch components into a melting crucible, the initial batch is heated to 1100 to 1150°C,
b) the melt temperature is raised to 1230 to 1270°C and left at this temperature with simultaneous stirring of the melt over a time span of between 15 and 30 minutes,
c) the melt is then founded until free of bubbles at a temperature of between 1130 and 1170°C,
d) the melt temperature is thereafter reduced to 880 to 920°C,
e) the melt is then poured off into moulds preheated to 530 to 570°C and
f) finally cooled down in a furnace.
9. Method according to claim 8, characterised thereby, that
a) the heating of the batch takes place at a temperature of 1120°C,
b) the raising of the melt temperature to 1250°C takes place with simultaneous stirring of the melt during a time of 20 minutes,
c) the founding then takes place at 1150°C,
d) the reduction of the melt temperature to 900°C takes place subsequently,
e) then the pouring-off takes place at 900°C into moulds preheated to 550°C and
f) the cooling-down in the tempering furnace takes place finally.